# EUROPEAN PATENT APPLICATION

(11) **EP 4 600 075 A1**
(43) Date of publication of application: **13.08.2025**
(21) Application number: 24156594.4
(22) Date of filing: 08.02.2024
(51) Int. Cl.: B60L 53/10, B60L 53/14

(54) **CHARGING ASSEMBLY FOR A TRACTION BATTERY OF A VEHICLE, METHOD FOR OPERATING A CHARGING ASSEMBLY, AND VEHICLE**

(71) Applicant: Volvo Car Corporation, 405 31 Göteborg (SE)
(72) Inventor: KADAM, Sumegh, 40531 Göteborg (SE)
(74) Representative: Maiwald GmbH

(57) **Abstract**

The disclosure relates to a charging assembly (12) for a traction battery of a vehicle. The charging assembly (12) comprises a first electric interface (18), a second electric interface (20), a third electric interface (24), a determining unit and a switching unit. The determining unit is coupled to the first electric interface (18) and configured to determine whether an AC charging current or a DC charging current is provided at the first electric interface (18). The switching unit is electrically coupled to the first electric interface (18) and to the third electric interface (24) and communicatively coupled to the determining unit. The switching unit is configured to electrically disconnect the first electric interface (18) from the third electric interface (24) if the DC charging current is determined to be provided at the first electric interface (18) and to electrically connect the first electric interface (18) to the third electric interface (24) if the AC charging current is determined to be provided at the first electric interface (18). Moreover, the disclosure relates to a method for operating a charging assembly (12) for a traction battery of a vehicle and to a vehicle comprising a charging assembly (12).

## Description

### TECHNICAL FIELD

The present disclosure relates to a charging assembly for a traction battery of a vehicle. The charging assembly comprises a first electric interface configured to receive charging current.

Moreover, the present disclosure relates to a method for operating a charging assembly for a traction battery of a vehicle.

Furthermore, the present disclosure relates to a vehicle comprising a charging assembly.

### BACKGROUND ART

A traction battery of a vehicle, more precisely of a battery electric vehicle, needs to be recharged in recurring intervals. In this context, a traction battery of a vehicle is a rechargeable storage for electric energy, wherein the electric energy is used for driving the vehicle. Recharging may be accomplished by a DC (direct current) charging current or by an AC (alternating current) charging current, each originating from a charging infrastructure external to the vehicle.

Recharging may further require mechanical coupling between the battery electric vehicle and the charging infrastructure. In this context, the vehicle may feature a physical charging inlet, i.e. a charging socket.

Physical charging inlets may come in different forms and sizes and may involve different functionalities. In particular, one type of charging inlets may allow charging the traction battery of the vehicle by a DC charging current. Another type of charging inlets may allow charging the traction battery of the vehicle by an AC charging current. There are also types of combined charging inlets that allow charging of the traction battery of the vehicle by a DC charging current or by an AC charging current.

### SE:TOP

Combined charging inlets may feature different conductors for receiving either DC charging current or AC charging current.

### SUMMARY

The objective of the present disclosure is to further improve charging means that allow charging of the traction battery of the vehicle by a DC charging current or by an AC charging current.

The problem is at least partially solved or alleviated by the subject matter of the independent claims of the present disclosure, wherein further examples are incorporated in the dependent claims.

According to a first aspect, there is provided a charging assembly for a traction battery of a vehicle. The charging assembly comprises a first electric interface, a second electric interface, a third electric interface, a determining unit and a switching unit. The first electric interface is configured to receive an AC charging current or a DC charging current from a charging infrastructure. The second electric interface is configured to be electrically connected to the traction battery. The third electric interface is configured to be electrically connected to an on-board charger of the vehicle. The determining unit is coupled to the first electric interface and configured to determine whether the AC charging current or the DC charging current is provided at the first electric interface. The switching unit is electrically coupled to the first electric interface and to the third electric interface and communicatively coupled to the determining unit. The switching unit is configured to electrically disconnect the first electric interface from the third electric interface if the DC charging current is determined to be provided at the first electric interface and to electrically connect the first electric interface to the third electric interface if the AC charging current is determined to be provided at the first electric interface. In this context, electrically disconnecting is to be in that a flow of electric current between the electrically disconnected elements is rendered impossible. Accordingly, electrically connecting is to be understood in that a flow of electric current between the electrically connected elements is rendered possible. Such a charging assembly has the advantage that it allows charging of the traction battery using AC charging current or DC charging current. Both types of charging current may be provided via the same electric interface, i.e. the first electric interface. In other words the charging assembly is flexible as far as the type of charging current is concerned. Moreover, such a charging assembly offers a high level of user comfort. This is due to the fact that the determining unit is configured to determine whether an AC charging current or a DC charging current is provided. Due to the communicative coupling between the switching unit and the determining unit, the switching unit can adapt its switching state to the AC charging current or the DC charging current. Thus, a user does not need to think about the type of charging current he or she is using. This also reduces an error potential as far as incorrect charging of the traction battery is concerned. Furthermore, such a charging assembly is structurally simple and, thus, can be designed in a compact manner, e.g. because only one electric interface, i.e. the first electric interface, is needed even though an AC charging current or a DC charging current may be used. This facilitates the integration of such a charging assembly into a vehicle. Additionally, the simple and compact nature of the charging assembly facilitates the use of such a charging assembly as a retrofit component. In this case, the charging assembly may be used as a replacement for existing charging assemblies or charging interfaces of vehicles.

The determining unit being coupled to the first electric interface can be understood as being electrically and/or communicatively connected. There may be a wired connection between the first electric interface and the determining unit allowing the determining unit to determine whether AC charging current or DC charging current is provided at the first electric interface. Additionally or alternatively, there may be an inductive or capacitive connection between the determining unit and the first electric interface. The inductive or capacitive connection may provide impulses and/or data indicative of a changing electric and/or magnetic field around one or more of the conductors of the first electric interface. Based thereon, the type of the charging current may be determined quickly and reliably.

In an example, the determining unit and the switching unit of the charging assembly may be formed as one unit. This further enhances the compactness of the charging assembly.

According to an example, the determining unit comprises a communication interface configured to be communicatively coupled to the traction battery. In this example, the traction battery needs to comprise a switching means configured to selectively connect or disconnect the traction battery and the second electric interface. Thus, this switching means of the traction battery may be caused to electrically disconnect the traction battery and the second electric interface if the AC charging current is determined to be provided at the first electric interface. This is done via the communication interface. Moreover, the switching means of the traction battery may be caused to electrically connect the traction battery and the second electric interface if the DC charging current is determined to be provided at the first electric interface. This is also done via the communication interface. This further enhances the flexibility of the charging assembly as far as the type of charging current is concerned. Moreover, user comfort is further enhanced.

In an example, the determining unit comprises an application specific integrated circuit (ASIC) configured to determine whether the AC charging current or the DC charging current is provided at the first electric interface. Using an ASIC is simple and reliable.

In another example, the determining unit is designed in accordance with Automotive Safety Integrity Level D (ASII, D) as defined by ISO 26262 standard directed to Functional Safety for Road Vehicles. This means that the determination whether the AC charging current or the DC charging current is provided is executed in accordance with very high standards of safety and reliability. In an example, a voltage measured at the first electric interface in order to determine whether the AC charging current or the DC charging current is provided, may be measured with an accuracy of +/- 2%.

In a further example, the determining unit may comprise a so-called dual core comprising an integrated circuit for power management (PMIC) and an automotive microcontroller unit (MCU).

In an example, the switching unit is electrically coupled to the second electric interface. The switching unit is configured to electrically disconnect the first electric interface from the second electric interface if the AC charging current is determined to be provided at the first electric interface and to electrically connect the first electric interface and the second electric interface if the DC charging current is determined to be provided at the first electric interface. This has the effect that the AC charging current is prevented from directly reaching the traction battery by the switching unit. Instead, the AC charging current is routed via the on-board charger. The electrical disconnection of the first electric interface and the second electric interface eliminates undesired influences of the AC charging current on the traction battery. In contrast thereto, DC charging current provided at the first electric interface is directly routed to the traction battery of the vehicle in order to charge it without further losses.

In an example, the switching unit comprises at least one transistor or at least one contactor. The at least one transistor may be a MOSFET. In all of these examples the switching unit can reliably switch between a connected and disconnected state of the first electric interface and the second electric interface and/or between a connected or disconnected state of the first electric interface and the third electric interface. Moreover, transistors, e.g. MOSFETs, and contactors are able to switch within a comparatively short time span.

In an example, the switching unit comprises at least one OR gate. The OR gate may comprise two electric half bridges. Also in this configuration, the switching functionality of the switching unit may be provided in a very reliable manner. A further advantage of the OR gate is that it structurally only allows for one electric connection. This means that when the first electric interface is disconnected from the second electric interface, an electric connection between the first electric interface and the third electric interface is automatically established. In turn, when the first electric interface is disconnected from the third electric interface, an electric connection between the first electric interface and the second electric interface is automatically established.

In an example, the first electric interface is connected to at least one capacitance. The at least one capacitance may be a provided by a capacitor. The at least one capacitance has a filtering and/or attenuating effect. If AC charging current is applied to a wired connection, electromagnetic noise may occur. The at least one capacitance helps attenuating this electromagnetic noise and thus increases electromagnetic compatibility (EMC) of the charging assembly. Reducing electromagnetic noise is of particular importance in a case in which the charging assembly itself is not capable of electrically disconnecting the first electric interface from the second electric interface and if AC charging current is provided to the first electric interface. In this case, the AC charging current may be applied to the connection between the second electric interface and the traction battery of the vehicle. This may create significant electromagnetic noise if not attenuated by the at least one capacitance. Of course, it is to be understood that either the traction battery itself or the control unit of the traction battery may feature a contactor or the like to electrically disconnect the traction battery from the AC charging current.

In an example, each of the first electric interface, the second electric interface and the third electric interface comprises two conductors. The two conductors are configured to conduct the AC charging current and the DC charging current. This means that the first electric interface, the second electric interface and the third electric interface feature exactly two conductors for electric power transmission. In particular, this means that the same conductors are in place to which both AC charging current and DC charging current is provided. In other words, there are no separate conductors for AC charging current and DC charging current. This renders the charging assembly structurally simple and compact. The electric conductors may be formed as busbars. This makes the electric power transmission particularly robust and reliable.

In an example, the determining unit comprises a communication interface configured to be communicatively coupled to a control unit of the traction battery and/or a control unit of the on-board charger. This has the effect that the control unit of the traction battery or the control unit of the onboard charger may be notified whether AC charging current or DC charging current is provided at the first electric interface. The respective components can then be put in an appropriate operational state, e.g. by operating associated switches. This enhances the reliability and service life of these components. The communicative coupling can be accomplished via a bus system. The bus system may be a Controller Area Network (CAN). Alternatively, the bus system may be a Local Interconnect Network (LIN). The communicative coupling may also be accomplished by a power management integrated circuit (PMIC). It is to be understood that the determining unit and/or the control unit of the traction battery and/or the control unit of the on-board charger may partly or entirely be formed as one unit.

In an example, the charging assembly comprises a housing. The first electric interface, the second electric interface, the third electric interface, the determining unit, and the switching unit are arranged in or on the housing. Thus, the first electric interface, the second electric interface, the third electric interface, the determining unit, and the switching unit are provided as components of one coherent entity. This facilitates handling and installation of the charging assembly. The housing may for example facilitate the mechanical integration and connection of the charging assembly. Moreover, the housing protects the first electric interface, the second electric interface, the third electric interface, the determining unit, and the switching unit against environmental influences. The same applies to electrical and/or communicative connections between these elements.

In an example, the housing measures 300 mm by 250 mm by 100 mm or less. In another example the housing measures 216.38 mm by 187.35 mm by 65 mm. In other words, the housing is comparatively compact. This has the effect that the charging assembly including its housing may be flexibly attached to the body of the vehicle and/or integrated into the vehicle. In particular, the charging assembly including its housing may be attached to a body-in-white of the vehicle adjacent to an outer skin of the vehicle. In this context, the outer skin of the vehicle may be provided by outside panels of the body-in-white. Thus, the housing may be attached in close proximity to the portions of the body-in-white defining an outer, three-dimensional shape of the vehicle.

In an example, a charging inlet configured in accordance with the standard SAE J3400 is electrically connected to the first electric interface. More specifically, the charging inlet complies with the standard J3400_202312 issued by SAE International on 18 December 2023. This standard is also known as North American Charging Standard (NACS). The charging inlet being configured according to this standard has the effect that the charging inlet can be connected to a corresponding plug of charging infrastructure according to the same standard. The standard ensures a wide usability of the vehicle, which comprises the charging inlet, in a broad territorial range in which it has been agreed to adhere to the standard. Moreover, the standard SAE J3400 has the advantage that charging interfaces, e.g. charging inlets are configured to receive AC charging current or DC charging current. This is simple and comfortable for a user as has been explained before. In contrast thereto, the so-called Combined Charging System (CCS) provides a charging inlet with different conductors for receiving AC charging current and DC charging current. This renders the charging inlet larger and bulkier.

In an example, the charging inlet is arranged directly on the housing. This has the effect that no cable is needed between the charging inlet and the first electric interface. Alternatively, the charging inlet is connected to the first electric interface via a cable. This has the effect that the charging inlet and the first electric interface, may be arranged at positions that are apart from each other. This enhances the flexibility when arranging the charging assembly in a vehicle. This is particularly beneficial if little space is available at a location at which the charging inlet shall be arranged. Thus, the remaining components of the charging assembly may be provided at a different location.

In an example, the charging assembly further comprises a mechanical connection interface configured to mount the charging assembly on a body of the vehicle. In particular, the mechanical connection interface may be configured to mount the charging assembly on the body-in-white or on an outer skin of the vehicle. This has the effect that the charging assembly may be reliably attached to the body of the vehicle and thus to the vehicle itself.

According to a second aspect, there is provided a method for operating a charging assembly for a traction battery of a vehicle. The charging assembly comprises a first electric interface, a second electric interface and a third electric interface. The first electric interface is configured to receive an AC charging current or a DC charging current from a charging infrastructure. The second electric interface is configured to be electrically connected to the traction battery. The third electric interface is configured to be electrically connected to an on-board charger of the vehicle. The method comprises:
- Obtaining whether an AC charging current or a DC charging current is provided at a first electric interface, and
- Causing an electric connection between the first electric interface and the second electric interface in case the DC charging current is provided. Alternatively, the method comprises causing an electric connection between the first electric interface and the third electric interface in case the AC charging current is provided.

In this context, obtaining is to be understood as receiving or determining whether an AC charging current or a DC charging current is provided at the first electric interface. Causing is to be understood as triggering and/or providing an electric connection between the first electric interface and the second electric interface or between the first electric interface and the third electric interface. The method has the effect that when DC charging current is provided at the first electric interface, the DC charging current is directly provided to the traction battery of the vehicle via the second electric interface in order to charge the traction battery of the vehicle. The method has the further effect that when AC charging current is provided at the first electric interface, the AC charging current is provided to the on-board charger of the vehicle via the third electric interface in order to convert it into DC charging current, which can then be used to charge the traction battery of the vehicle. In other words, the method is flexible as far as the type of charging current is concerned. Moreover, such a method offers a high level of user comfort. This is due to the fact that a user does not need to think about the type of charging current he or she is using. This also reduces an error potential as far as incorrect charging of the traction battery is concerned.

In an example, the method further comprises causing an electric disconnection between the first electric interface and the second electric interface in case the AC charging current is provided at the first electric interface. Alternatively, the method comprises causing an electric disconnection between the first electric interface and the third electric interface in case the DC charging current is provided at the first electric interface. This has the effect that the AC charging current is prevented from directly reaching the traction battery. Instead, the AC charging current is routed via the on-board charger. The electrical disconnection of the first electric interface and the second electric interface eliminates undesired influences of the AC charging current on the traction battery. In contrast thereto, DC charging current provided at the first electric interface is directly routed to the traction battery of the vehicle in order to charge it without further losses.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a vehicle comprising a charging assembly according to the present disclosure. The vehicle further comprises a traction battery. The second electric interface of the charging assembly is electrically connected to the traction battery. The vehicle further comprises an on-board charger. The third electric interface is electrically connected to the on-board charger. The onboard charger is configured to convert AC charging current into DC charging current, which can be provided to the traction battery in order to charge it. Thus, depending on whether AC charging current or DC charging current is provided at the first electric interface of the charging assembly, AC charging current can be provided to the on-board charger of the vehicle and DC charging current can directly be provided to the traction battery of the vehicle. Thus, the traction battery of the vehicle can be charged regardless of AC charging current or DC charging current being provided at the first electric interface of the charging assembly. In other words the vehicle is flexible as far as the type of charging current is concerned. Moreover, a user does not need to think about the type of charging current he or she is using. This enhances user comfort and reduces an error potential as far as incorrect charging of the traction battery is concerned.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a charging assembly according to a first example of the present disclosure attached to a body of a vehicle according to the present disclosure in a first perspective representation as seen in direction I in Figure 2,
- Figure 2: shows the charging assembly of Figure 1 in a second perspective representation as seen in direction II in Figure 1,
- Figure 3: shows a schematic view of the charging assembly of Figures 1 and 2,
- Figure 4: shows a schematic view of a charging assembly according to a second example of the present disclosure,
- Figure 5: shows a schematic view of a charging assembly according to a third example of the present disclosure,
- Figure 6: shows a schematic view of a charging assembly according to a fourth example of the present disclosure, and
- Figure 7: shows steps of a method according to the present disclosure for operating a charging assembly for a traction battery of a vehicle.

### DETAILED DESCRIPTION

The Figures are merely schematic representations and serve only to illustrate examples of the disclosure. Identical or equivalent elements are in principle provided with the same reference signs.

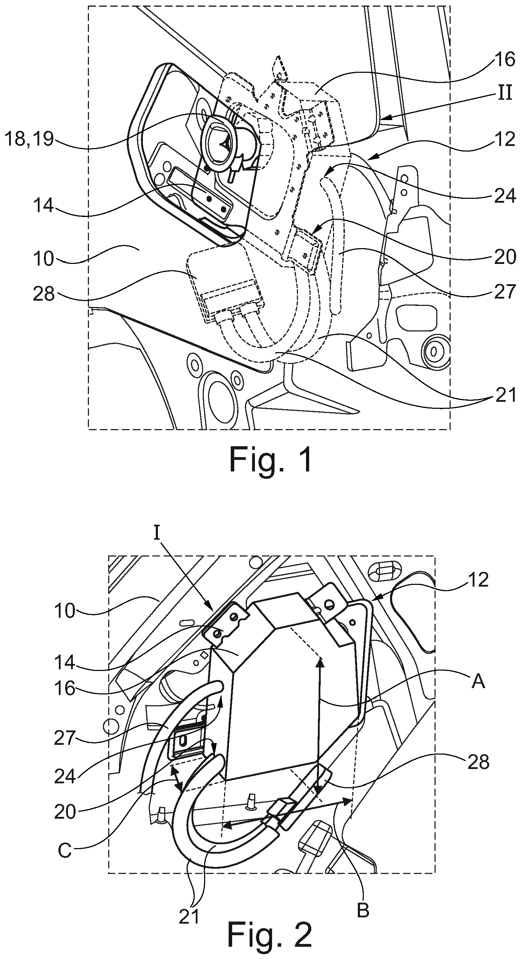

Figure 1 shows a portion of a body 10 of a vehicle. More specifically, the portion of the body 10 is part of an outer skin of the vehicle. The portion of the body 10 is shown in a transparent manner.

The vehicle is a battery electric vehicle and comprises a charging assembly 12 which is attached to the body 10 via an attachment part 14 which is frame-shaped in the embodiment shown in the figures.

More precisely, the charging assembly comprises a housing 16 which is mechanically attached to the frame-shaped attachment part 14 and the frame-shaped attachment part is mechanically attached to the body 10.

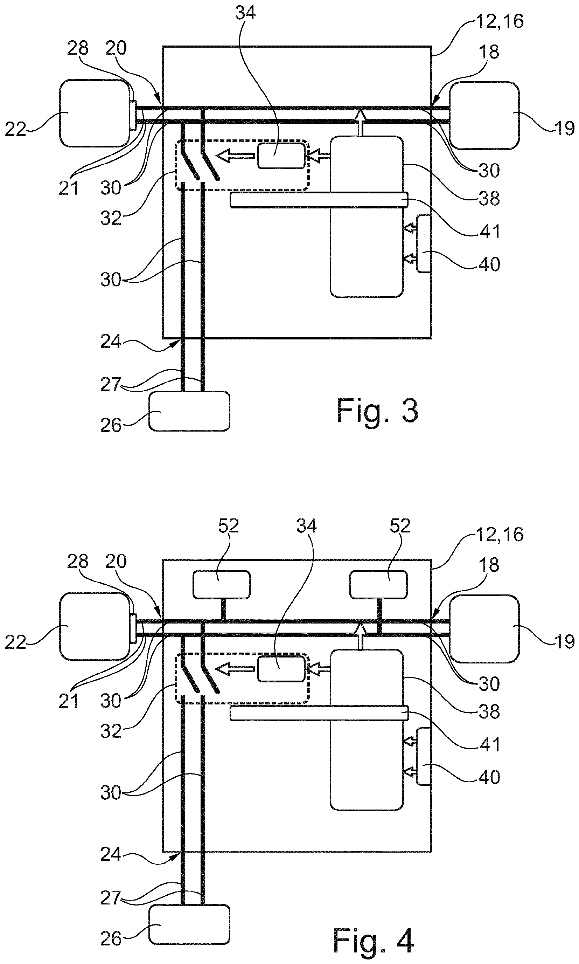

On the housing 16, the charging assembly 12 features a first electric interface 18 which is electrically connected to a charging inlet 19. The charging inlet 19 is designed as a female socket with its opening directed to an environment of the vehicle. In other words, the charging inlet 19 is configured to receive a male connector of a charging cable coming from a charging infrastructure (not shown) external to the vehicle. The charging inlet 19 is configured in accordance with Standard J3400_202312 issued by SAE International on 18 December 2023. On the housing 16, the charging assembly 12 also features a second electric interface 20. The second electric interface 20 is connected to a traction battery 22 of the vehicle via a pair of cables 21 and a connector 28 (see also Figure 3).

On the housing 16, the charging assembly further features a third electric interface 24. The third electric interface 24 is connected to an on-board charger 26 of the vehicle via corresponding cable 27 (see also Figure 3).

In the present example, all of the first electric interface 18, the second electric interface 20 and the third electric interface 24 comprise two conductors 30. At the first electric interface 18, the two conductors 30 are configured to conduct DC charging current or AC charging current that is received at the charging inlet 19 from a charging infrastructure external to the vehicle.

Figure 2 also shows dimensions of the housing 16 of the charging assembly. A height A of the housing is approximately 215 mm. A width B of the housing is approximately 185 mm. A depth C of the housing is approximately 65 mm.

Figure 3 schematically shows an interior of the housing 16.

Inside the housing, a switching unit 32 of the charging assembly 12 is provided.

In the example of Figures 1 to 3, the switching unit 32 comprises two contactors 33 actuated by a common driver 34. Additionally or alternatively, the switching unit 32 may also comprise at least one transistor 36, which may be a MOSFET. The switching unit 32 is electrically coupled to the first electric interface 18 and to the third electric interface 24. Consequently, by operating the contactors 33, the switching unit is capable of selectively electrically connecting the first electric interface 18 and the third electric interface 24 and capable of selectively disconnecting the first electric interface 18 and the third electric interface. In other words, the on-board charger 26 of the vehicle can be selectively electrically connected to the first electric interface 18 and can be selectively electrically disconnected from the first electric interface 18.

The charging assembly 12 additionally comprises a determining unit 38. The determining unit 38 is coupled to the first electric interface 18 via the conductors 30. This is indicated by an arrow in Figure 3.

Moreover, the determining unit 38 is communicatively coupled to the switching unit 32. This is also indicated by an arrow in Figure 3.

The determining unit 38 is configured to determine whether the AC charging current or the DC charging current is provided at the first electric interface 18. Furthermore, due to the communicative coupling between the determining unit 38 and the switching unit 32, the contactors 33 may be switched as a function of the determined charging current using the determining unit 38. In more detail, the first electric interface 18 may be disconnected from the third electric interface 24 by opening the contactors 33 if the DC charging current is determined to be provided at the first electric interface 18. Otherwise, i.e. if the AC charging current is determined to be provided at the first electric interface 18, the first electric interface 18 and the third electric interface 24 may be electrically connected by closing the contactors 33.

In order to provide this functionality, the determining unit may comprises one or more microcontroller units and/or one or more application specific integrated circuits (ASICs).

The charging assembly 12 further comprises an isolation means 41 which is arranged inside the housing 16 and which shields a high voltage zone inside the housing 16 from a low voltage zone inside the housing 16.

Additionally, the determining unit 38 comprises a communication interface 40 which is configured to communicatively connect the determining unit 38 to a control unit of the on-board charger 26 and/or to a control unit of the traction battery 22. This communication may comprise indicating whether the first electric interface 18 is disconnected from the third electric interface 24 or not. Additionally or alternatively, this communication may comprise an indication whether an AC charging current or a DC charging current is provided at the first electric interface 18.

Figure 4 shows a second example of a charging assembly 12. In the following, only the differences with respect to the charging assembly 12 of Figure 3 will be explained.

In addition to the components which have already been explained in connection with the charging assembly 12 of Figure 3, the example of Figure 4 comprises two capacitors 52, more specifically two so-called Y-capacitors. One of these capacitors 52 is electrically connected to each of the electric conductors 30 extending from the first electric interface 18.

Such capacitors 52 are capable of filtering out electromagnetic noise originating from AC charging current provided at the first electric interface 18.

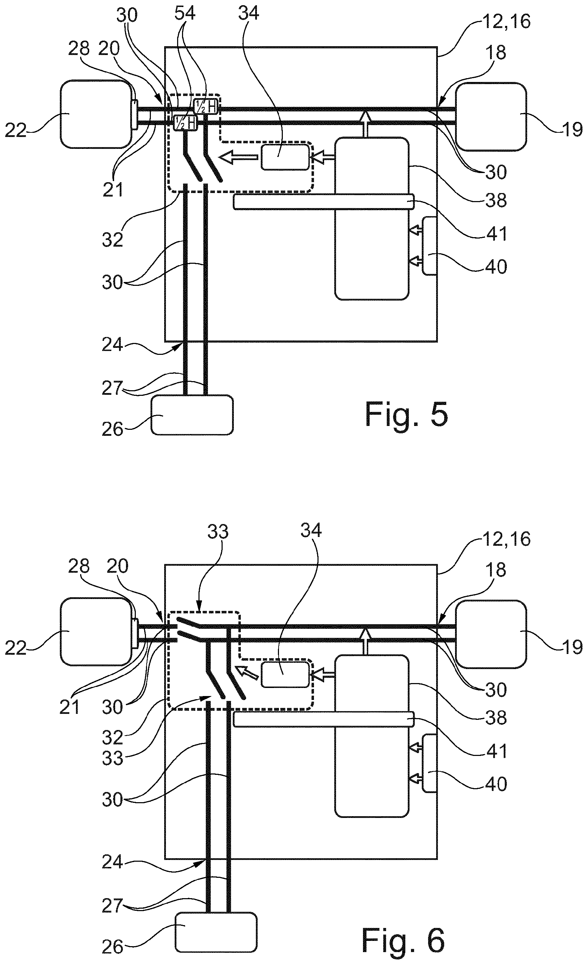

Figure 5 shows a further example of the charging assembly 12. As before, only the differences with respect to the charging assembly of Figure 3 will be explained.

Instead of the contactors 33, the charging assembly 12 of Figure 5 uses an two OR gate 54. In the present example, each OR gate 54 is designed as a half bridge.

Each OR gate 54 is coupled to the first electric interface 18, to the second electric interface 20 and to the third electric interface 24. Moreover, each OR gate 54 is configured to electrically connect the first electric interface 18 to the second electric interface 20 or the third electric interface 24. In case an OR gate 54 electrically connects the first electric interface 18 to the second electric interface 20, the third electric interface 24 is disconnected from the first electric interface 18. In the same manner, in case an OR gate 54 electrically connects the first electric interface 18 to the third electric interface 24, the second electric interface 24 is disconnected from the first electric interface 18.

Thus, in case the first electric interface 18 receives DC charging current, the OR gate 54 disconnects the first electric interface 18 from the third electric interface 24. However, using the OR gate 54, the first electric interface 18 is electrically connected to the second electric interface 20.

In case the first electric interface 18 receives AC charging current, the OR gate 54 disconnects the first electric interface 18 from the second electric interface 20. However, the first electric interface 18 is electrically connected to the third electric interface 24 via the OR gate 54.

Figure 6 shows a further example of the charging assembly 12. As before, only the differences with respect to the previous examples, especially with respect to the example of Figure 3, will be explained.

In contrast to the example of Figure 3, the switching unit 32 now comprises two additional contactors 33. As has already been explained in connection with Figure 3, two of these contactors are coupled to the first electric interface 18 and the third electric interface 24 such that the first electric interface 18 and the third electric interface 24 may be selectively electrically connected or disconnected using the contactors 33. The additional two contactors 33 in the example of Figure 6 are coupled to the first electric interface 18 and the second electric interface 20. Thus, using these contactors 33 the first electric interface 18 and the second electric interface 20 may be selectively electrically connected or disconnected. As has already been explained in connection with Figure 3, some or all of the contactors 33 may be replaced transistors 36, such as MOSFETs.

It is noted that even though the examples of Figures 3 to 6 have been explained as separate examples, these examples may be combined. For example, the capacitors 52 as introduced in the example of Figure 3 may be optionally used in all other examples. The same applies to the different components of the switching unit 32.

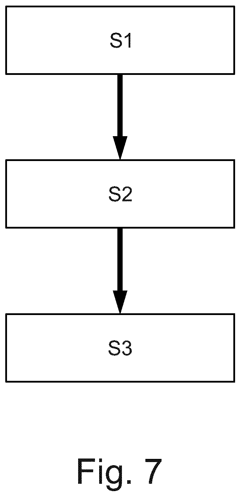

Figure 7 illustrates steps of a method for operating a charging assembly for a traction battery of a vehicle. This method may be executed in connection with each of the examples as shown in Figures 1 to 6.

A first step S 1 of the method comprises obtaining whether AC charging current or DC charging current is provided at the first electric interface 18. This step uses the determining unit 38.

A second step S2 of the method involves causing an electric connection between the first electric interface 18 and the second electric interface 20, in case DC charging current is provided at the first electric interface 18. Alternatively, step S2 involves causing an electric connection between the first electric interface 18 and the third electric interface 24, in case AC charging current is provided at the first electric interface 18. In order to execute this step, the determining unit 38 communicates with the switching unit 33 which establishes the desired electric connections.

A third step S3 of the method involves causing an electric disconnection between the first electric interface 18 and the second electric interface 20, in case AC charging current is provided at the first electric interface 18. Alternatively, step S2 involves causing an electric disconnection between the first electric interface 18 and the third electric interface 24, in case DC charging current is provided at the first electric interface 18. In order to execute this step, the determining unit 38 communicates with the switching unit 33 which establishes the desired electric disconnections.

It is noted that the order of the second step S2 and the third step S3 may be inverted. Moreover, the second step S2 and the third step S3 may be executed in parallel.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: body of vehicle
- 12: charging assembly
- 14: attachment part
- 16: housing
- 18: first electric interface
- 19: charging inlet
- 20: second electric interface
- 21: cable to traction battery
- 22: traction battery
- 24: third electric interface
- 26: on-board charger
- 27: cable to on-board charger
- 28: connector to traction battery
- 30: conductors
- 32: switching unit
- 33: contactor
- 34: drivers
- 36: transistor
- 38: determining unit
- 40: communication interface
- 41: isolation means
- 52: capacitor
- 54: OR gate

- A: height of housing
- B: width of housing
- C: depth of housing
- S1: first step
- S2: second step
- S3: third step

## Claims

1. A charging assembly (12) for a traction battery (22) of a vehicle, comprising a first electric interface (18) configured to receive an AC charging current or a DC charging current from a charging infrastructure,
a second electric interface (20) configured to be electrically connected to the traction battery (22),
a third electric interface (24) configured to be electrically connected to an on-board charger (26) of the vehicle,
a determining unit (38) coupled to the first electric interface (18) and configured to determine whether the AC charging current or the DC charging current is provided at the first electric interface (18), and
a switching unit (32) electrically coupled to the first electric interface (18) and to the third electric interface (24) and communicatively coupled to the determining unit (38),
wherein the switching unit (32) is configured to electrically disconnect the first electric interface (18) from the third electric interface (24) if the DC charging current is determined to be provided at the first electric interface (18) and to electrically connect the first electric interface (18) to the third electric interface (24) if the AC charging current is determined to be provided at the first electric interface (18).

2. The charging assembly (12) of claim 1, wherein the switching unit (32) is electrically coupled to the second electric interface (20) and wherein the switching unit (32) is configured to electrically disconnect the first electric interface (18) from the second electric interface (20) if the AC charging current is determined to be provided at the first electric interface (18) and to electrically connect the first electric interface (18) and the second electric interface (20) if the DC charging current is determined to be provided at the first electric interface (18).

3. The charging assembly (12) of claim 1 or 2, wherein the switching unit (32) comprises at least one transistor (36) or at least one contactor (33).

4. The charging assembly (12) of any one of the preceding claims, wherein the switching unit comprises at least one OR gate (54).

5. The charging assembly of any one of the preceding claims, wherein the first electric interface (18) is connected to at least one capacitance.

6. The charging assembly (12) of any one of the preceding claims, wherein each of the first electric interface (18), the second electric interface (20) and the third electric interface (24) comprises two conductors (30) and wherein the two conductors (30) are configured to conduct the AC charging current and the DC charging current.

7. The charging assembly (12) of any one of the preceding claims, wherein the determining unit (38) comprises a communication interface configured to be communicatively coupled to a control unit (44) of the traction battery (22) and/or a control unit (42) of the on-board charger (26).

8. The charging assembly (12) of any one of the preceding claims, further comprising a housing (16), wherein the first electric interface (18), the second electric interface (20), the third electric interface (24), the determining unit (38), and the switching unit (32) are arranged in or on the housing (16).

9. The charging assembly (12) of claim 8, wherein the housing (16) measures 300 mm by 250 mm by 100 mm or less.

10. The charging assembly (12) of any one of the preceding claims, wherein a charging inlet (19) configured in accordance with the standard SAE J3400 is electrically connected to the first electric interface (18).

11. The charging assembly (12) of claim 8 or 9 and claim 10, wherein the charging inlet (19) is arranged directly on the housing (16) or wherein the charging inlet (19) is connected to the first electric interface (18) via a cable.

12. The charging assembly (12) of any one of the preceding claims, further comprising a mechanical connection interface configured to mount the charging assembly (12) on a body (10) of the vehicle.

13. A method for operating a charging assembly (12) for a traction battery (22) of a vehicle, wherein the charging assembly (12) comprises a first electric interface (18) configured to receive an AC charging current or a DC charging current from a charging infrastructure, a second electric interface (20) configured to be electrically connected to the traction battery (22), and a third electric interface (24) configured to be electrically connected to an on-board charger (26) of the vehicle, the method comprising
- Obtaining whether an AC charging current or a DC charging current is provided at a first electric interface (18), and
- Causing an electric connection between the first electric interface (18) and the second electric interface (20) in case the DC charging current is provided or causing an electric connection between the first electric interface (18) and the third electric interface (24) in case the AC charging current is provided.

14. The method of claim 13, further comprising
causing an electric disconnection between the first electric interface (18) and the second electric interface (20) in case the AC charging current is provided or causing an electric disconnection between the first electric interface (18) and the third electric interface (24) in case the DC charging current is provided.

15. A vehicle comprising a charging assembly (12) of any one of claims 1 to 12,
wherein the vehicle comprises a traction battery (22) and the second electric interface (20) of the charging assembly (12) is electrically connected to the traction battery (22), and
wherein the vehicle comprises an on-board charger (26) and the third electric interface (24) is electrically connected to the on-board charger (26).

## Amended claims

### Amended claims in accordance with Rule 137(2) EPC.

1. A charging assembly (12) for a traction battery (22) of a vehicle, comprising a first electric interface (18) configured to alternatively receive an AC charging current or a DC charging current from a charging infrastructure,
a second electric interface (20) configured to be electrically connected to the traction battery (22),
a third electric interface (24) configured to be electrically connected to an on-board charger (26) of the vehicle,
a determining unit (38) coupled to the first electric interface (18) and configured to determine whether the AC charging current or the DC charging current is provided at the first electric interface (18), and
a switching unit (32) electrically coupled to the first electric interface (18) and to the third electric interface (24) and communicatively coupled to the determining unit (38), wherein the switching unit (32) is configured to electrically disconnect the first electric interface (18) from the third electric interface (24) if the DC charging current is determined to be provided at the first electric interface (18) and to electrically connect the first electric interface (18) to the third electric interface (24) if the AC charging current is determined to be provided at the first electric interface (18).

2. The charging assembly (12) of claim 1, wherein the switching unit (32) is electrically coupled to the second electric interface (20) and wherein the switching unit (32) is configured to electrically disconnect the first electric interface (18) from the second electric interface (20) if the AC charging current is determined to be provided at the first electric interface (18) and to electrically connect the first electric interface (18) and the second electric interface (20) if the DC charging current is determined to be provided at the first electric interface (18).

3. The charging assembly (12) of claim 1 or 2, wherein the switching unit (32) comprises at least one transistor (36) or at least one contactor (33).

4. The charging assembly (12) of any one of the preceding claims, wherein the switching unit comprises at least one OR gate (54).

5. The charging assembly of any one of the preceding claims, wherein the first electric interface (18) is connected to at least one capacitance.

6. The charging assembly (12) of any one of the preceding claims, wherein each of the first electric interface (18), the second electric interface (20) and the third electric interface (24) comprises two conductors (30) and wherein the two conductors (30) are configured to conduct the AC charging current and the DC charging current.

7. The charging assembly (12) of any one of the preceding claims, wherein the determining unit (38) comprises a communication interface configured to be communicatively coupled to a control unit (44) of the traction battery (22) and/or a control unit (42) of the on-board charger (26).

8. The charging assembly (12) of any one of the preceding claims, further comprising a housing (16), wherein the first electric interface (18), the second electric interface (20), the third electric interface (24), the determining unit (38), and the switching unit (32) are arranged in or on the housing (16).

9. The charging assembly (12) of claim 8, wherein the housing (16) measures 300 mm by 250 mm by 100 mm or less.

10. The charging assembly (12) of any one of the preceding claims, wherein a charging inlet (19) configured in accordance with the standard SAE J3400 is electrically connected to the first electric interface (18).

11. The charging assembly (12) of claim 8 or 9 and claim 10, wherein the charging inlet (19) is arranged directly on the housing (16) or wherein the charging inlet (19) is connected to the first electric interface (18) via a cable.

12. The charging assembly (12) of any one of the preceding claims, further comprising a mechanical connection interface configured to mount the charging assembly (12) on a body (10) of the vehicle.

13. A method for operating a charging assembly (12) for a traction battery (22) of a vehicle, wherein the charging assembly (12) comprises a first electric interface (18) configured to alternatively receive an AC charging current or a DC charging current from a charging infrastructure, a second electric interface (20) configured to be electrically connected to the traction battery (22), and a third electric interface (24) configured to be electrically connected to an on-board charger (26) of the vehicle, the method comprising
- Obtaining, by a determining unit (38) coupled to the first electric interface (18), whether an AC charging current or a DC charging current is provided at a first electric interface (18), and
- Causing an electric connection between the first electric interface (18) and the second electric interface (20) in case the DC charging current is provided or causing an electric connection between the first electric interface (18) and the third electric interface (24) in case the AC charging current is provided.

14. The method of claim 13, further comprising
causing an electric disconnection between the first electric interface (18) and the second electric interface (20) in case the AC charging current is provided or causing an electric disconnection between the first electric interface (18) and the third electric interface (24) in case the DC charging current is provided.

15. A vehicle comprising a charging assembly (12) of any one of claims 1 to 12,
wherein the vehicle comprises a traction battery (22) and the second electric interface (20) of the charging assembly (12) is electrically connected to the traction battery (22), and
wherein the vehicle comprises an on-board charger (26) and the third electric interface (24) is electrically connected to the on-board charger (26).
